# FASCICULE DE BREVET EUROPEEN

(11) **EP 2 221 202 B1**
(45) Date de publication et mention de la délivrance du brevet: **04.04.2012**
(21) Numéro de dépôt: 10152749.7
(22) Date de dépôt: 05.02.2010
(51) Int. Cl.: B60H 3/00, B60H 1/00

(54) **Dispositif d'odorisation de l'habitacle d'un véhicule automobile**
Kraftfahrzeuginnenraumbeduftungsvorrichtung
Device for scenting a vehicle interior

(30) Priorité: 17.02.2009 FR 0900708
(43) Date de publication de la demande: 25.08.2010
(73) Titulaire: Valeo Systèmes Thermiques, 78321 Le Mesnil-Saint-Denis Cedex (FR)
(72) Inventeur: Cornu, Laurence, 78730 Saint Arnoult en Yvelines (FR); Feuillard, Vincent, 78320 Le Mesnil Saint Denis (FR); Ladrech, Frédéric, 78310 Maurepas (FR)
(74) Mandataire: Vieillevigne, Sébastien Nicolas Bernard

(56) Documents cités:
- EP-A- 1 398 187
- WO-A-03/049961
- US-A- 5 429 180

## Description

L'invention concerne les dispositifs d'odorisation de l'habitacle d'un véhicule automobile.

L'habitacle d'un véhicule automobile constitue un espace clos. En été et en hiver, lorsque les fenêtres de la voiture sont fermées et que le système de conditionnement d'air est utilisé pour refroidir et/ou chauffer l'intérieur de l'habitacle, des odeurs désagréables peuvent être senties provenant de l'intérieur de l'habitacle (fumée de cigarette, animaux de compagnie, produits transportés, matières plastiques des composants de l'habitacle, ...) ou de l'extérieur de l'habitacle (gaz d'échappement, pollution, substances malodorantes, ...) .

En conséquence, il est connu d'équiper les véhicules de dispositifs qui ont pour fonctions principales d'éliminer ou de masquer les odeurs.

Plus précisément, il est connu une installation de chauffage, ventilation et/ou climatisation d'un habitacle d'un véhicule automobile comprenant un boîtier logeant un pulseur apte à générer un flux d'air dans le boîtier, au moins un échangeur de chaleur apte à traiter thermiquement le flux d'air et au moins un conduit d'air apte à canaliser le flux d'air depuis une chambre de mixage vers une première zone de l'habitacle et un dispositif d'odorisation apte à diffuser une fragrance.

De telles installations sont notamment connus des documents FR 2 833 534 et FR 2 815 294, ainsi que du document WO 03/049961, qui constitue l'art antérieur de plus proche.

Ces dispositifs et installations connus présentent l'inconvénient de ne pas fournir un flux d'air de qualité optimale et de température constante ayant pour conséquence que la perception de la fragrance n'est pas idéale.

En effet, le flux d'air entrant dans le dispositif d'odorisation n'est pas traité, c'est-à-dire systématiquement filtré de ses polluants et odeurs, préalablement à son admission afin de se charger en fragrance.

De plus, le flux d'air n'est pas dans une plage de température maitrisée puisqu'il est issu de l'extérieur du véhicule et/ou recirculé depuis l'intérieur de l'habitacle. Il est donc possible d'avoir un flux d'air très froid ou, inversement, très chaud traversant le dispositif d'odorisation. Ainsi, l'évaporation de la fragrance n'est pas maitrisée puisque la plage de température est variable.

Dans de telles circonstances, la fragrance se dénature si la température est trop haute, et elle est moins bien perçue, voire non ressentie, si la température est trop basse.

Enfin, les dispositifs et installations connus requièrent des modifications importantes du boîtier de l'appareil de chauffage, ventilation et/ou climatisation afin d'intégrer le dispositif d'odorisation et ainsi charger en fragrance un flux d'air destiné à être diffusé dans l'habitacle du véhicule.

La présente invention remédie à ces inconvénients. Elle propose une installation de chauffage, ventilation et/ou climatisation d'un habitacle d'un véhicule automobile comprenant un boîtier logeant un pulseur apte à générer un flux d'air dans le boîtier, au moins un échangeur de chaleur apte à traiter thermiquement le flux d'air et au moins un conduit d'air apte à canaliser le flux d'air depuis une chambre de mixage vers une première zone de l'habitacle et un dispositif d'odorisation apte à diffuser une fragrance, l'installation de chauffage, ventilation et/ou climatisation comportant un conduit de dérivation permettant de canaliser une partie du flux d'air vers une deuxième zone dédiée de l'habitacle, le conduit de dérivation comportant une connexion pour permettre la séparation de la partie du flux d'air en flux d'air de réfrigération canalisé vers la deuxiéme zone dédiée par une canalisation de réfrigération et un flux d'air à odoriser canalisé vers le dispositif d'odorisation par une canalisation d'odorisation.

La présente invention présente l'avantage de proposer un flux d'air filtré et à une température donnée constante. Cela permet d'assurer une qualité de diffusion de la frangrance dans l'habitacle du véhicule et de maitriser cette diffusion.

A cet effet, le boîtier loge un filtre et en ce que le conduit de dérivation capte la partie du flux d'air (F) en aval du filtre.

Alternativement ou en complément, le conduit de dérivation capte la partie du flux d'air en aval ou en amont de l'échangeur de chaleur.

De façon préférentielle, l'échangeur de chaleur est un évaporateur et/ou un radiateur de chauffage.

Selon un autre mode de réalisation, le conduit de dérivation capte la partie du flux d'air dans le conduit d'air apte à canaliser le flux d'air depuis la chambre de mixage vers une première zone de l'habitacle.

Par ailleurs, le dispositif d'odorisation est raccordé à une canalisation de réintroduction pour conduire un flux d'air odorisé sortant du dispositif d'odorisation jusqu'à une zone de diffusion agencée dans le boîtier.

Avantageusement, la zone de diffusion agencée dans le boîtier est la chambre de mixage ou le conduit d'air apte à canaliser le flux d'air depuis la chambre de mixage vers une première zone de l'habitacle.

Le dispositif d'odorisation comporte un boîtier d'odorisation comprenant une chambre d'odorisation dans laquelle la partie du flux d'air se charge en fragrance. De plus, le boîtier d'odorisation comprend une interface entre un flacon et la chambre d'odorisation pour permettre la diffusion de la fragrance.

Suivant l'invention, le conduit de dérivation comporte une connexion pour permettre la séparation de la partie du flux d'air en un flux d'air de réfrigération canalisé vers la deuxième zone dédiée par une canalisation de réfrigération et un flux d'air à odoriser canalisé vers le dispositif d'odorisation par une canalisation d'odorisation.

La connexion comprend un collecteur relié à deux conduits formant respectivement la canalisation d'odorisation et la canalisation de réfrigération ou un collecteur comprenant une séparation interne formant respectivement la canalisation d'odorisation et la canalisation de réfrigération.

De façon particulière, la deuxième zone dédiée de l'habitacle est une boîte à gants agencée dans l'habitacle du véhicule.

D'autres caractéristiques et avantages de l'invention apparaîtront encore à la lecture de la description qui suit d'exemples de réalisation donnés à titre illustratif en référence aux figures annexées, sur lesquelles :
- la figure 1 est une vue générale en coupe d'une installation de chauffage, ventilation et/ou climatisation de l'habitacle d'un véhicule automobile conforme à la présente invention,
- la figure 2 est une vue de détail d'un dispositif d'odorisation selon la présente invention, et
- les figures 3a à 3f sont des vues schématiques de différents modes de réalisation d'une connexion intégrée à la présente invention.

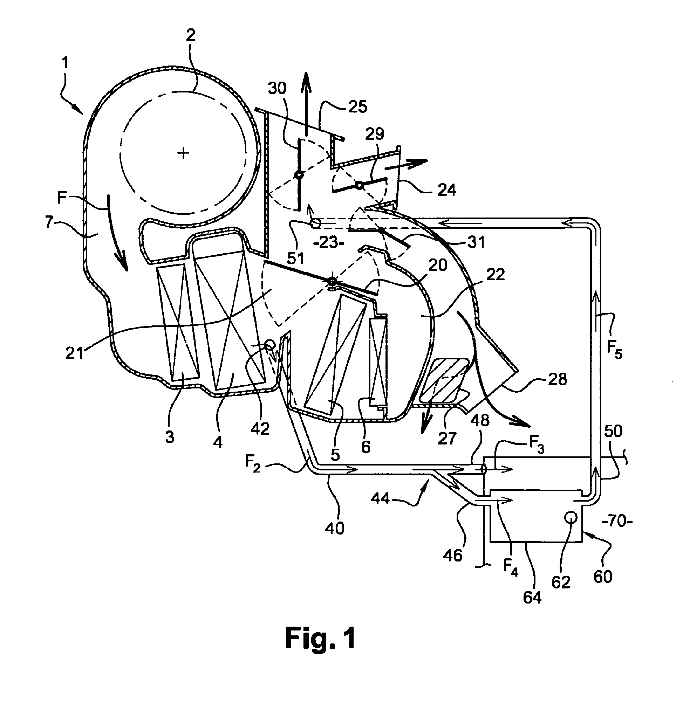

On a représenté sur la figure 1 une vue générale en coupe d'une installation de chauffage, ventilation et/ou climatisation conforme à l'invention comprenant, notamment, un appareil de chauffage, ventilation et/ou climatisation et un dispositif d'odorisation.

Le boîtier 1 de l'appareil de chauffage, ventilation et/ou climatisation comprend, en tant qu'éléments principaux de traitement d'air, un pulseur 2, un filtre 3, un évaporateur 4, un radiateur de chauffage 5. De plus, le boîtier 1 peut également loger une source de chaleur d'appoint 6 telle qu'une résistance électrique à coefficient de température positif.

Le boîtier 1 comporte une ouverture d'entrée d'air (non représentée) débouchant au niveau du pulseur 2. Le pulseur 2 comporte une turbine aspirant l'air par l'ouverture d'entrée d'air et génère un flux d'air F dans le boîtier 1 qui circule dans une conduite 7 située, selon le présent exemple de réalisation, à l'extrémité avant du boîtier 1, puis circule sensiblement de l'avant vers l'arrière, selon la direction longitudinale d'implantation de l'appareil de chauffage, ventilation et/ou climatisation dans un habitacle de véhicule automobile, à travers le filtre 3 et l'évaporateur 4. A la traversé de l'évaporateur 4, le flux d'air F est refroidi. A la suite de l'évaporateur 4, le flux d'air F est réparti en une première portion du flux d'air F dirigé vers une branche de réchauffage 22 logeant le radiateur de chauffage 5 et est réchauffé lorsqu'il traverse le radiateur de chauffage 5. Une deuxième portion du flux d'air F est dirigé vers une branche de transmission 21 située en parallèle de la branche de réchauffage 22.

L'évaporateur 4, le radiateur de chauffage 5 et, éventuellement, la source de chaleur d'appoint 6 sont des échangeurs de chaleurs permettant le traitement thermique du flux d'air F.

La première portion du flux d'air F canalisée par la branche de réchauffage et la deuxième portion du flux d'air F canalisée par la branche de transmission se mélangent dans une chambre de mixage 23.

Un volet papillon 20 est monté pivotant, autour d'un axe transversal au boîtier 1, de manière à se déplacer entre une première position extrême, représentée en trait plein sur la figure 1, dans laquelle les ailes du volet papillon 20 libèrent respectivement l'entrée et la sortie de la branche de réchauffage 22 pour aboutir à la chambre de mixage 23 située au-dessus du volet papillon 20 et obturant un passage direct de l'évaporateur 4 vers la chambre de mixage 23 via la branche de transmission 21, et une deuxième position extrême, représentée en trait interrompu sur la figure 1, dans laquelle les ailes du volet papillon 20 obturent respectivement l'entrée et la sortie de la branche de réchauffage 22, le passage direct vers la chambre de mixage 23 via la branche de transmission 21 étant libéré. Le volet papillon 20 assure la fonction de volet de mixage. Le volet papillon 20 assure une fonction de volet de mixage du flux d'air.

Le présent exemple de réalisation comporte un volet de mixage 20 de type 'papillon'. Néanmoins, la présente invention couvre également les variantes intégrant des volets de types 'drapeau', 'tambour' ou 'film'.

À partir de la chambre de mixage 23, le boîtier 1 comporte des conduits d'air pour la distribution du flux d'air F dans au moins une première zone de l'habitacle. Selon l'exemple de réalisation, trois conduits d'air débouchent dans diverses zones de l'habitacle du véhicule constituant une ou plusieurs première(s) zone(s) de l'habitacle : un conduit d'aération 24 relié à un ou plusieurs aérateurs disposés, de façon préférentielle, en partie médiane et/ou latérale de l'habitacle et apte à diffuser le flux d'air issu de la zone mixage 23 vers un espace de l'habitacle où se trouve un passager du véhicule, un conduit de dégivrage 25 relié à une buse de dégivrage apte à diffuser le flux d'air issu de la zone mixage 23 vers le pare-brise du véhicule, et un conduit 'pieds' 27 relié à un ou plusieurs aérateurs disposés, de façon préférentielle, en partie basse de l'habitacle et apte à diffuser le flux d'air issu de la zone mixage vers les pieds du conducteur et des passagers.

De plus, un conduit 'arrière' 28 peut être disposé afin d'alimenter une ou plusieurs zones arrière de l'habitacle. Le conduit 'arrière' 28 peut se trouver en dérivation du conduit 'pieds' 27, tel que présenté sur la figure 1.

Le conduit 'arrière' 28 peut également être agencé en un conduit distinct et dédié à l'alimentation de la zone arrière de l'habitacle.

Des volets pivotants 29, 30 et 31 sont placés en entrées respectivement des conduits d'air d'aération 24, d'air de dégivrage 25, 'pieds' 27 et 'arrière' 28 afin de régler les débits d'air dans ces conduits. Les volets pivotants 29, 30 et 31 assurent la fonction de volets de distribution.

Le présent exemple de réalisation comporte des volets pivotants 29, 30 et 31 de type 'papillon'. Néanmoins, la présente invention couvre également les variantes intégrant des volets de distribution de types 'drapeau', 'tambour' ou 'film'.

L'appareil de chauffage, ventilation et/ou climatisation représenté sur la figure 1 est partie intégrante d'une installation de chauffage, ventilation et/ou climatisation comportant un conduit de dérivation 40 apte à canaliser un flux d'air F2, constituant une partie du flux d'air F traité thermiquement dans l'appareil de chauffage, ventilation et/ou climatisation 1, vers une deuxième zone dédiée 70 de l'habitacle.

La deuxième zone dédiée 70 de l'habitacle constitue un espace spécifique de l'habitacle distinct de la première zone de l'habitacle telle que définie précédemment.

Le flux d'air F2 est capté par le conduit de dérivation 40 par une ouverture 42 agencée dans une paroi du boîtier 1 de l'appareil de chauffage, ventilation et/ou climatisation. Selon le mode de réalisation de la figure 1, l'ouverture 42 est disposée dans une zone du boîtier 1 se trouvant, dans le sens de l'écoulement du flux d'air F, en aval de l'évaporateur 4 et en amont des branches de transmission 21 et de réchauffage 22.

De façon préférentielle, la deuxième zone dédiée 70 de l'habitacle est une boîte à gants disposée dans l'habitacle du véhicule. Tel qu'illustré sur la figure 1, le conduit de dérivation 40 permet de diriger le flux d'air F2, qui est un flux d'air froid, vers la boîte à gants et ainsi la réfrigérer.

Selon la présente invention, l'installation de chauffage, ventilation et/ou climatisation comporte également un dispositif d'odorisation 60. De façon particulièrement avantageuse, le dispositif d'odorisation 60 est monté dans la deuxième zone dédiée 70, c'est-à-dire, selon un mode préféré de l'invention, intégré à la boîte à gants de l'habitacle du véhicule automobile. Le dispositif d'odorisation 60 est donc accessible par le conducteur et les passagers.

Le dispositif d'odorisation 60 est raccordé à une canalisation d'odorisation 46. La canalisation d'odorisation 46 est connectée avec le conduit de dérivation 40 au niveau d'une connexion 44. La connexion 44 permet la séparation du flux d'air F2 en un flux d'air de réfrigération F3 canalisé vers la deuxième zone dédiée 70 par une canalisation de réfrigération 48 raccordé à la connexion 44 et un flux d'air à odoriser F4 canalisé par la canalisation d'odorisation 46.

Le dispositif d'odorisation 60 est alimenté par le flux d'air à odoriser F4. Il est donc au moins alimenté par au moins une partie du flux d'air F2.

Selon une variante de réalisation non représentée, la partie du flux d'air F2 débouche directement dans la deuxième zone dédiée 70. Par suite, le flux d'air à odoriser F4 est capté depuis la deuxième zone dédiée 70 afin d'alimenter le dispositif d'odorisation 60. Un tel mode de réalisation constitue une version simplifiée de la présente invention.

Le dispositif d'odorisation 60 est raccordé à une canalisation de réintroduction 50 permettant de diriger un flux d'air odorisé F5 sortant du dispositif d'odorisation 60 jusqu'à une zone de diffusion du flux d'air odorisé F5 agencée dans le boîtier 1. De façon préférentielle, la zone de diffusion du flux d'air odorisé F5 est disposée en amont d'un dispositif de distribution d'air constitué par les conduits d'air d'aération 24, d'air de dégivrage 25, 'pieds' 27 et 'arrière' 28. Notamment, la zone de diffusion du flux d'air odorisé F5 est constituée par la zone de mixage 23.

Le flux d'air F5 pénètre dans la zone de mixage 23 par une ouverture 51 agencée dans une paroi du boîtier 1 de l'appareil de chauffage, ventilation et/ou climatisation.

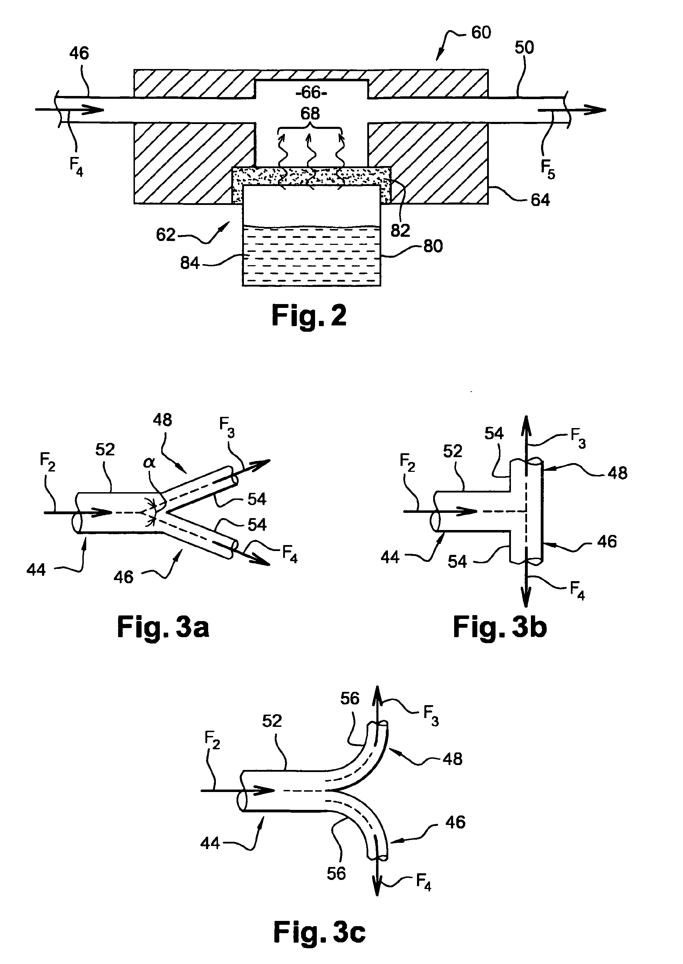

Le dispositif d'odorisation 60 comprend une cartouche 62 d'une fragrance introduite dans un boîtier d'odorisation 64. Un tel agencement sera décrit plus en détail en relation avec la figure 2.

La figure 2 est une vue de détail du dispositif d'odorisation 60 intégré à l'installation de chauffage, ventilation et/ou climatisation de la figure 1.

Le dispositif d'odorisation 60 est notamment constitué par le boîtier d'odorisation 64 et de la cartouche 62. Il comprend également une chambre d'odorisation 66 dans laquelle le flux d'air à odoriser F4 se charge en fragrance 68 diffusée dans la chambre d'odorisation 66 depuis la cartouche 62.

Plus particulièrement, la cartouche 62 est constituée d'un flacon 80 en contact avec une interface 82 apte à permettre la diffusion de la fragrance 68 dans la chambre d'odorisation 66.

L'exemple selon la figure 2 présente un flacon 80 servant à recevoir la fragrance 68, notamment sous forme liquide. Selon des variantes de réalisation non représentées, la fragrance 68 peut être portée par un support imprégné, par exemple des granulés, ou à l'état de gel.

Le flacon 80 contient la fragrance 68 sous forme liquide et constitue une réserve 84 de fragrance 68. Dans un tel agencement, l'interface 82 est de type air/liquide.

De plus, il est envisageable de disposer un organe permettant d'isoler le dispositif d'odorisation 60 des conduits de circulation du flux d'air. Notamment, il est possible d'inserer un moyen d'obturation de la canalisation de réintroduction 50, par exemple par l'intermédiaire d'un volet pivotant. En alternative ou en complément, il est également d'insérer un moyen d'obturation du conduit de dérivation 40, par exemple à l'aide d'un volet pivotant.

Ainsi isolé, une diffusion non contrôlée et/ou non désirée de la fragrance par le dispositif d'odorisation 60 n'est pas possible.
Les figures 3a à 3f sont des vues schématiques de différents modes de réalisation de la connexion 44 permettant l'alimentation du dispositif d'odorisation 60 en air.

La figure 3a présente une première variante de réalisation de la connexion 44. La connexion 44 comporte un collecteur 52 canalisant le flux d'air F2. Le collecteur 52 est divisé en aval en deux conduits formant respectivement les canalisations d'odorisation 46 et de réfrigération 48.

Selon ce premier exemple, les canalisations d'odorisation 46 et de réfrigération 48 sont réalisées par deux conduits droits 54 formant un angle a entre eux.

De façon préférentielle, les conduits droits 54 sont agencés de façon symétrique par rapport à l'axe du collecteur 52. La connexion 44 selon la figure 3a présente donc une forme générale en 'Y'.

La figure 3b présente une alternative de réalisation de la figure 3a dans laquelle l'angle α entre les deux canaux droits 54 est égal à 180°. La connexion 44 selon la figure 3b présente donc une forme générale en `T'.

La connexion 44 selon la variante de réalisation de la figure 3c diffère de la connexion 44 de la figure 3a par la forme des canalisations d'odorisation 46 et de réfrigération 48.

En effet, la connexion 44 comporte à la suite du collecteur 52 deux conduits courbes 56 formant les canalisations d'odorisation 46 et de réfrigération 48.

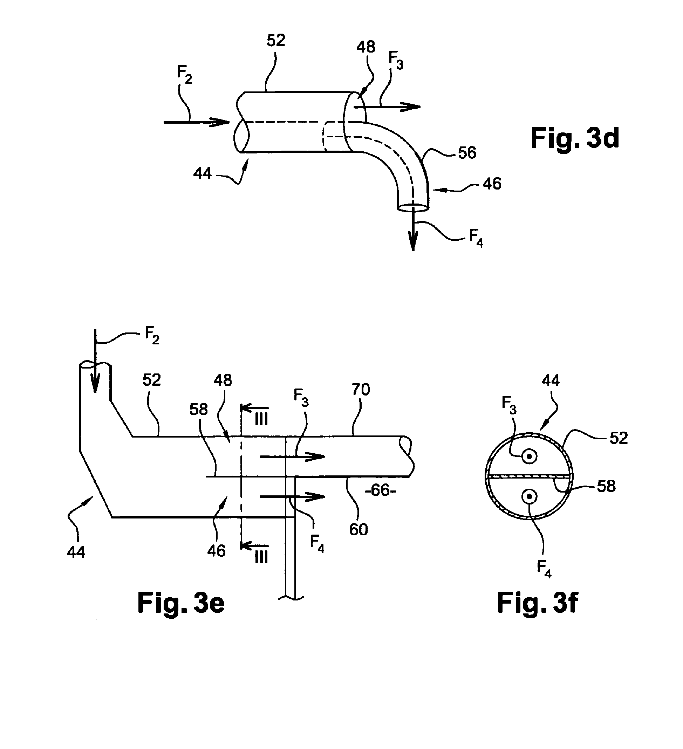

La figure 3d présente une alternative de réalisation de la figure 3c dans laquelle il existe un unique canal courbe 56. Selon cet exemple de réalisation, le canal courbe 56 entre dans le collecteur 52 et constitue une séparation interne permettant de canaliser le flux d'air à odoriser F4 vers le dispositif d'odorisation 60.

Le flux d'air de réfrigération F3 est dirigé vers la deuxième zone dédiée 70 par l'intermédiaire d'un conduit dédié non représenté. Alternativement, le flux d'air de réfrigération F3 peut directement déboucher dans la deuxième zone dédiée 70.

Selon les exemples des figures 3a à 3c, la séparation du flux d'air F2 en flux d'air de réfrigération F3 et en flux d'air à odoriser F4 se fait par l'intermédiaire de conduits dédiés 54 et 56 définissant les canalisations d'odorisation 46 et de réfrigération 48. Les figures 3e et 3f illustrent un dernier exemple de réalisation de connexion 44. La figure 3f est une vue en coupe selon la ligne III-III de la figure 3e.

Les canalisations d'odorisation 46 et de réfrigération 48 selon l'exemple de la figure 3e sont définies dans le collecteur 52. A cet effet, le collecteur 52 comporte une cloison séparatrice 58 disposée en amont de la sortie du collecteur 52. La cloison séparatrice 58 constitue une séparation interne au collecteur 52. La sortie du collecteur 52 est en liaison avec la deuxième zone dédiée 70 et le dispositif d'odorisation 60.

Dans les divers exemples décrits de connexion 44, le collecteur 44 est de section circulaire et les conduits droits 54 et courbes 56 formant les canalisations d'odorisation 46 et de réfrigération 48 sont également de section circulaire. D'autres formes pourraient être envisagées sans sortir du cadre de la présente invention.

Alternativement, la cartouche 62 est constituée d'un support mélangé à une fragrance, de manière à former un corps solide qui peut être manipulé aisément par l'utilisateur. Elle comporte également des moyens de diffusion de la fragrance, par exemple une résistance électrique ayant pour effet de chauffer le support et de libérer la fragrance qu'il contient.

La cartouche 62 peut comporter une unique fragrance ou plusieurs fragrances différentes et étanches entre eux. Selon cette deuxième variante, les utilisateurs du véhicule peuvent choisir de diffuser la fragrance désirée dans l'habitacle. Bien entendu, cette forme ne constitue qu'un exemple, et d'autres formes pourraient être envisagées. Le dispositif d'odorisation de la présente invention est particulièrement simple et économique.

Selon la présente invention, la commande marche/arrêt et le réglage de l'intensité sont pilotés par un module électronique, de préférence agencé dans le tableau de commande de l'installation de chauffage, ventilation et/ou climatisation.

En particulier, selon une variante de réalisation, les moyens de commande marche/arrêt et d'intensité pourraient être intégrés à la cartouche. Pour changer de parfum, on remplace la cartouche. Ainsi, la mise en service ou hors service, le choix du parfum et/ou le réglage de l'intensité de l'odorisation peuvent être obtenus par la rotation de la cartouche 62 par rapport au boîtier d'odorisation 64, qui peut être effectuée manuellement par l'utilisateur.

L'exemple de réalisation présenté comporte un conduit de dérivation dédié à la réfrigération de la boite à gants agencée dans l'habitacle du véhicule. Néanmoins, la présente invention s'applique également à toute installation de chauffage, ventilation et/ou climatisation comportant un conduit canalisant un flux d'air.

Notamment, l'ouverture du conduit de dérivation peut être localisée dans un conduit quelconque. A titre d'exemple, l'ouverture 42 du conduit de dérivation 40 peut se trouver dans les conduits 24, 25, 27 et 28 menant aux sorties d'air d'aération, de dégivrage, 'pieds' ou 'arrière'. Dans une telle configuration, le conduit de dérivation 40 capte le flux d'air F2 en aval, dans le sens de l'écoulement du flux d'air F, des échangeurs de chaleurs 4, 5 et 6.

Selon l'exemple décrit, la canalisation de réintroduction 50 débouche dans la chambre de mixage 23 du boîtier 1 de l'appareil de chauffage, ventilation et/ou climatisation. Dans une alternative de réalisation couverte par la présente invention, la canalisation de réintroduction 50 peut déboucher dans un conduit 24, 25, 27 ou 28 destiné à la distribution du flux d'air F dans l'habitacle. Notamment, la canalisation de réintroduction 50 peut déboucher dans les conduits menant aux sorties d'air d'aération, de dégivrage, 'pieds' ou 'arrière'.

Ainsi, selon une variante de réalisation, le conduit de dérivation 40 peut prendre naissance et la canalisation de réintroduction 50 peut déboucher dans les conduits menant aux sorties d'air d'aération, de dégivrage, 'pieds' ou 'arrière', et, en particulier, dans le même conduit, par exemple le conduit menant à la sortie d'air d'aération.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Installation de chauffage, ventilation et/ou climatisation d'un habitacle d'un véhicule automobile comprenant un boîtier (1) logeant un pulseur (2) apte à générer un flux d'air (F) dans le boîtier (1), au moins un échangeur de chaleur (4, 5, 6) apte à traiter thermiquement le flux d'air (F) et au moins un conduit d'air (24, 25, 27, 28) apte à canaliser le flux d'air (F) depuis une chambre de mixage (23) vers une première zone de l'habitacle et un dispositif d'odorisation (60) apte à diffuser une fragrance (68),
l'installation de chauffage, ventilation et/ou climatisation comportant un conduit de dérivation (40) permettant de canaliser une partie (F2) du flux d'air (F) vers une deuxième zone dédiée (70) de l'habitacle, **caractérisée en ce que** le conduit de dérivation (40) comporte une connexion (44) pour permettre la séparation de la partie (F2) du flux d'air (F) en un flux d'air de réfrigération (F3) canalisé vers la deuxième zone dédiée (70) par une canalisation de réfrigération (48) et un flux d'air à odoriser (F4) canalisé vers le dispositif d'odorisation (60) par une canalisation d'odorisation (46).

2. Installation de chauffage, ventilation et/ou climatisation selon la revendication 1, **caractérisée en ce que** le boîtier (1) loge un filtre (3) et **en ce que** le conduit de dérivation (40) capte la partie (F2) du flux d'air (F) en aval du filtre (3).

3. Installation de chauffage, ventilation et/ou climatisation selon la revendication 1 ou 2, **caractérisée en ce que** le conduit de dérivation (40) capte la partie (F2) du flux d'air (F) en aval de l'échangeur de chaleur (4, 5, 6).

4. Installation de chauffage, ventilation et/ou climatisation selon l'une des revendications précédentes, **caractérisée en ce que** le conduit de dérivation (40) capte la partie (F2) du flux d'air (F) en amont de l'échangeur de chaleur (4, 5, 6).

5. Installation de chauffage, ventilation et/ou climatisation selon la revendication 3 ou 4, **caractérisée en ce que** l'échangeur de chaleur est un évaporateur (4).

6. Installation de chauffage, ventilation et/ou climatisation selon la revendication 3 ou 4, **caractérisée en ce que** l'échangeur de chaleur est un radiateur de chauffage (5, 6).

7. Installation de chauffage, ventilation et/ou climatisation selon l'une des revendications 1 à 3, **caractérisée en ce que** le conduit de dérivation (40) capte la partie (F2) du flux d'air (F) dans le conduit d'air (24, 25, 27, 28) apte à canaliser le flux d'air (F) depuis la chambre de mixage (23) vers une première zone de l'habitacle.

8. Installation de chauffage, ventilation et/ou climatisation selon l'une des revendications précédentes, **caractérisée en ce que** le dispositif d'odorisation (60) est raccordé à une canalisation de réintroduction (50) pour conduire un flux d'air odorisé (F5) sortant du dispositif d'odorisation (60) jusqu'à une zone de diffusion agencée dans le boîtier (1).

9. Installation de chauffage, ventilation et/ou climatisation selon la revendication 8, **caractérisée en ce que** la zone de diffusion agencée dans le boîtier (1) est la chambre de mixage (23).

10. Installation de chauffage, ventilation et/ou climatisation selon la revendication 8, **caractérisée en ce que** la zone de diffusion agencée dans le boîtier (1) est le conduit d'air (24, 25, 27, 28) apte à canaliser le flux d'air (F) depuis la chambre de mixage (23) vers une première zone de l'habitacle.

11. Installation de chauffage, ventilation et/ou climatisation selon l'une des revendications précédentes, **caractérisée en ce que** le dispositif d'odorisation comporte un boîtier d'odorisation (64) comprenant une chambre d'odorisation (66) dans laquelle la partie (F2) du flux d'air (F) se charge en fragrance (68).

12. Installation de chauffage, ventilation et/ou climatisation selon la revendication 11, **caractérisée en ce que** le boîtier d'odorisation (64) comprend une interface (82) entre un flacon (80) et la chambre d'odorisation (66) pour permettre la diffusion de la fragrance (68).

13. Installation de chauffage, ventilation et/ou climatisation selon l'une des revendications précédentes, **caractérisée en ce que** la connexion (44) comprend un collecteur (52) relié à deux conduits (54, 56) formant respectivement la canalisation d'odorisation (46) et la canalisation de réfrigération (48).

14. Installation de chauffage, ventilation et/ou climatisation selon l'une des revendications précédentes, **caractérisée en ce que** la connexion (44) comprend un collecteur (52) comprenant une séparation interne (56, 58) formant respectivement la canalisation d'odorisation (46) et la canalisation de réfrigération (48).

15. Installation de chauffage, ventilation et/ou climatisation selon l'une des revendications précédentes, **caractérisée en ce que** la deuxième zone dédiée (70) de l'habitacle est une boîte à gants agencée dans l'habitacle du véhicule.

## Claims

1. Installation for heating, ventilating and/or air-conditioning an interior of a motor vehicle comprising a housing (1) accommodating a blower (2) capable of generating an air flow (F) in the housing (1), at least one heat exchanger (4, 5, 6) capable of thermally treating the air flow (F) and at least one air duct (24, 25, 27, 28) capable of channelling the air flow (F) from a mixing chamber (23) to a first zone of the interior and an odorizing device (60) capable of diffusing a fragrance (68), the heating, ventilation and/or air-conditioning installation comprising a branch duct (40) making it possible to channel a portion (F2) of the air flow (F) to a second dedicated zone (70) of the interior, **characterized in that** the branch duct (40) comprises a connection (44) in order to allow the separation of the portion (F2) of the air flow (F) into a cooling air flow (F3) channelled to the second dedicated zone (70) by a cooling pipe (48) and an air flow to be odorized (F4) channelled to the odorizing device (60) by an odorizing pipe (46).

2. Heating, ventilation and/or air-conditioning installation according to Claim 1, **characterized in that** the housing (1) accommodates a filter (3) and **in that** the branch duct (40) captures the portion (F2) of the air flow (F) downstream of the filter (3).

3. Heating, ventilation and/or air-conditioning installation according to Claim 1 or 2, **characterized in that** the branch duct (40) captures the portion (F2) of the air flow (F) downstream of the heat exchanger (4, 5, 6) .

4. Heating, ventilation and/or air-conditioning installation according to one of the preceding claims, **characterized in that** the branch duct (40) captures the portion (F2) of the air flow (F) upstream of the heat exchanger (4, 5, 6).

5. Heating, ventilation and/or air-conditioning installation according to Claim 3 or 4, **characterized in that** the heat exchanger is an evaporator (4).

6. Heating, ventilation and/or air-conditioning installation according to Claim 3 or 4, **characterized in that** the heat exchanger is a heater (5, 6).

7. Heating, ventilation and/or air-conditioning installation according to one of Claims 1 to 3, **characterized in that** the branch duct (40) captures the portion (F2) of the air flow (F) in the air duct (24, 25, 27, 28) capable of channelling the air flow (F) from the mixing chamber (23) to a first zone of the interior.

8. Heating, ventilation and/or air-conditioning installation according to one of the preceding claims, **characterized in that** the odorizing device (60) is connected to a reinsertion pipe (50) in order to conduct an odorized air flow (F5) leaving the odorizing device (60) to a diffusion zone arranged in the housing (1).

9. Heating, ventilation and/or air-conditioning installation according to Claim 8, **characterized in that** the diffusion zone arranged in the housing (1) is the mixing chamber (23).

10. Heating, ventilation and/or air-conditioning installation according to Claim 8, **characterized in that** the diffusion zone arranged in the housing (1) is the air duct (24, 25, 27, 28) capable of channelling the air flow (F) from the mixing chamber (23) to a first zone of the interior.

11. Heating, ventilation and/or air-conditioning installation according to one of the preceding claims, **characterized in that** the odorizing device comprises an odorizing housing (64) comprising an odorizing chamber (66) in which the portion (F2) of the air flow (F) is laden with fragrance (68).

12. Heating, ventilation and/or air-conditioning installation according to Claim 11, **characterized in that** the odorizing housing (64) comprises an interface (82) between a bottle (80) and the odorizing chamber (66) to allow the diffusion of the fragrance (68).

13. Heating, ventilation and/or air-conditioning installation according to one of the preceding claims, **characterized in that** the connection (44) comprises a manifold (52) connected to two ducts (54, 56) forming respectively the odorizing pipe (46) and the cooling pipe (48).

14. Heating, ventilation and/or air-conditioning installation according to one of the preceding claims, **characterized in that** the connection (44) comprises a manifold (52) comprising an internal separation (56, 58) forming respectively the odorizing pipe (46) and the cooling pipe (48).

15. Heating, ventilation and/or air-conditioning installation according to one of the preceding claims, **characterized in that** the second dedicated zone (70) of the interior is a glove box arranged in the interior of the vehicle.

## Patentansprüche

1. Heiz-, Belüftungs- und/oder Klimatisierungsanlage eines Fahrgastraums eines Kraftfahrzeugs, mit einem Gehäuse (1), das eine Pulsationseinrichtung (2) enthält, die einen Luftstrom (F) in dem Gehäuse (1) erzeugen kann, wenigstens einem Wärmetauscher (4, 5, 6), der den Luftstrom (F) thermisch behandeln kann, wenigstens einer Luftleitung (24, 25, 27, 28), die den Luftstrom (F) von einer Mischkammer (23) zu einer ersten Zone des Fahrgastraums leiten kann, und einer Odorierungsvorrichtung (60), die einen Duft (68) verteilen kann,
wobei die Heiz-, Belüftungs- und/oder Klimatisierungsanlage eine Abzweigleitung (40) umfasst, die ermöglicht, einen Teil (F2) des Luftstroms (F) zu einer zweiten bestimmten Zone (70) des Fahrgastraums zu leiten, **dadurch gekennzeichnet, dass** die Abzweigleitung (40) eine Verbindung (44) aufweist, um die Trennung des Teils (F2) des Luftstroms (F) in einen Kühlungsluftstrom (F3), der zu der zweiten bestimmten Zone (70) durch eine Kühlungsleitung (48) geleitet wird, und in einen zu odorierenden Luftstrom (F4), der durch eine Odorierungsleitung (46) zu der Odorierungsvorrichtung (60) geleitet wird, zu ermöglichen.

2. Heiz-, Belüftungs- und/oder Klimatisierungsanlage nach Anspruch 1, **dadurch gekennzeichnet, dass** das Gehäuse (1) einen Filter (3) enthält und dass die Abzweigleitung (40) den Teil (F2) des Luftstroms (F) hinter dem Filter (3) auffängt.

3. Heiz-, Belüftungs- und/oder Klimatisierungsanlage nach Anspruch 1 oder 2, **dadurch gekennzeichnet, dass** die Abzweigleitung (40) den Teil (F2) des Luftstroms (F) hinter dem Wärmetauscher (4, 5, 6) auffängt.

4. Heiz-, Belüftungs- und/oder Klimatisierungsanlage nach einem der vorhergehenden Ansprüche, **dadurch gekennzeichnet, dass** die Abzweigleitung (40) den Teil (F2) des Luftstroms (F) vor dem Wärmetauscher (4, 5, 6) auffängt.

5. Heiz-, Belüftungs- und/oder Klimatisierungsanlage nach Anspruch 3 oder 4, **dadurch gekennzeichnet, dass** der Wärmetauscher ein Verdampfer (4) ist.

6. Heiz-, Belüftungs- und/oder Klimatisierungsanlage nach Anspruch 3 oder 4, **dadurch gekennzeichnet, dass** der Wärmetauscher ein Heizelement (5, 6) ist.

7. Heiz-, Belüftungs- und/oder Klimatisierungsanlage nach einem der Ansprüche 1 bis 3, **dadurch gekennzeichnet, dass** die Abzweigleitung (40) den Teil (F2) des Luftstroms (F) in der Luftleitung (24, 25, 27, 28), die den Luftstrom (F) von der Mischkammer (23) zu einer ersten Zone des Fahrgastraums leitet, auffängt.

8. Heiz-, Belüftungs- und/oder Klimatisierungsanlage nach einem der vorhergehenden Ansprüche, **dadurch gekennzeichnet, dass** die Odorierungsvorrichtung (60) mit einer Wiedereinleitungsleitung (50) verbunden ist, um einen odorierten Luftstrom (F5), der die Odorierungsvorrichtung (60) verlässt, bis zu einer im Gehäuse (1) angeordneten Verteilungszone zu leiten.

9. Heiz-, Belüftungs- und/oder Klimatisierungsanlage nach Anspruch 8, **dadurch gekennzeichnet, dass** die Verteilungszone, die im Gehäuse (1) angeordnet ist, die Mischkammer (23) ist.

10. Heiz-, Belüftungs- und/oder Klimatisierungsanlage nach Anspruch 8, **dadurch gekennzeichnet, dass** die in dem Gehäuse (1) angeordnete Verteilungszone die Luftleitung (24, 25, 27, 28) ist, die den Luftstrom (F) von der Mischkammer (23) zu einer ersten Zone des Fahrgastraums leiten kann.

11. Heiz-, Belüftungs- und/oder Klimatisierungsanlage nach einem der vorhergehenden Ansprüche, **dadurch gekennzeichnet, dass** die Odorierungsvorrichtung ein Odorierungsgehäuse (64) aufweist, das eine Odorierungskammer (66) enthält, in der der Teil (F2) des Luftstroms (F) mit einem Duftstoff (68) angereichert wird.

12. Heiz-, Belüftungs- und/oder Klimatisierungsanlage nach Anspruch 11, **dadurch gekennzeichnet, dass** das Odorierungsgehäuse (64) eine Grenzfläche (82) zwischen einer Flasche (80) und der Odorierungskammer (66) aufweist, um die Diffusion des Duftstoffs (68) zu ermöglichen.

13. Heiz-, Belüftungs- und/oder Klimatisierungsanlage nach einem der vorhergehenden Ansprüche, **dadurch gekennzeichnet, dass** die Verbindung (44) einen Sammler (52) umfasst, der mit zwei Leitungen (54, 56) verbunden ist, die die Odorierungsleitung (46) bzw. die Kühlungsleitung (48) bilden.

14. Heiz-, Belüftungs- und/oder Klimatisierungsanlage nach einem der vorhergehenden Ansprüche, **dadurch gekennzeichnet, dass** die Verbindung (44) einen Sammler (52) umfasst, der eine innere Trennung (56, 58) aufweist, die die Odorierungsleitung (46) bzw. die Kühlungsleitung (48) bildet.

15. Heiz-, Belüftungs- und/oder Klimatisierungsanlage nach einem der vorhergehenden Ansprüche, **dadurch gekennzeichnet, dass** die zweite bestimmte Zone (70) des Fahrgastraums ein Handschuhfach ist, das in dem Fahrgastraum angeordnet ist.
